# EUROPEAN PATENT APPLICATION

(11) **EP 3 474 431 A1**
(43) Date of publication of application: **24.04.2019**
(21) Application number: 18196753.0
(22) Date of filing: 26.09.2018
(51) Int. Cl.: H02K 37/14, H02K 1/14, H02K 1/18, H02K 7/116, H02K 11/33

(54) **DRIVE DEVICE**

(30) Priority: 10.10.2017 JP 2017196909
(71) Applicant: TGK CO., Ltd., Tokyo 193-0942 (JP)
(72) Inventor: MAEDA, Koichi, Tokyo, 193-0942 (JP); SANNOMIYA, Takashi, Tokyo, 193-0942 (JP)
(74) Representative: Schröer, Gernot H.

(57) **Abstract**

A drive device includes: a core member (32-A) that constitutes a stator core; and multiple positioning parts (36-A, 36-B, and 36-C) that are in contact with the core member (32-A) such as to position the core member (32-A) in the radial directions and circumferential directions of a rotor, in which: either core member (32-A) or each of the positioning parts (36-A, 36-B, and 36-C) includes a convex surface part (38) of an arc shape; and the other of the core member (32-A) and each of the positioning parts (36-A, 36-B, and 36-C) includes, at a contact portion in contact with the convex surface part (38), a concave surface part (40) of an arc shape of which the radius of curvature is larger than that of the arc formed by the convex surface part (38).

## Description

The present invention relates to a drive device provided with a motor as a drive source.

A drive device provided with a motor as a drive source has been conventionally known. The drive device comprises a rotor and a stator as constituting elements of the motor. The stator generally includes a stator core provided with multiple teeth parts (see Patent Document 1, for example).

[Patent Document 1] Japanese Unexamined Patent Application Publication No. 2014-241683

If a gap between a core member, which constitutes the stator core, and the rotor varies, the torque characteristics and other performance capabilities of the motor will be negatively affected. Therefore, a technology for improving the accuracy of positioning core members is required. Since the technology disclosed in Patent Document 1 has not been proposed from such perspective, there is room for improvement.

The present invention has been made in view of such a problem, and a purpose thereof is to provide a technology for improving the accuracy of positioning core members.

To solve the problem above, one embodiment of the present invention is a drive device. The drive device includes: a core member that constitutes a stator core; and multiple positioning parts that are in contact with the core member such as to position the core member in the radial directions and the circumferential directions of a rotor, wherein: either the core member or each of the positioning parts includes a convex surface part of an arc shape at a contact portion in contact with the other; and the other of the core member and each of the positioning parts includes, at a contact portion in contact with the convex surface part, a concave surface part of an arc shape of which the radius of curvature is larger than that of the arc formed by the convex surface part.

This embodiment prevents the positional deviation of the core member due to the influence of parallelism at the contact portion between the core member and each of the positioning parts, thereby improving the accuracy of positioning the core member.

Embodiments will now be described, by way of example only, with reference to the accompanying drawings which are meant to be exemplary, not limiting, and wherein like elements are numbered alike in several Figures, in which:
FIG. 1 is a plan view that schematically shows an internal structure of a drive device according to a first embodiment;
FIG. 2 is a plan view that shows part of a motor according to the first embodiment;
FIG. 3 is a sectional view taken along line A-A in FIG. 2;
FIG. 4A is a magnified view of a first core member according to the first embodiment, and FIG. 4B is a magnified view of a first positioning part provided for the first core member;
FIG. 5 is a diagram used to describe the functions of a core member and multiple positioning parts according to the first embodiment;
FIGS. 6 are plan views that schematically show a positioning structure in a reference example, in which FIG. 6A shows an example in which positioning surfaces are located at target positions, and FIG. 6B shows an example in which the positioning surfaces are located at positions deviated from the target positions;
FIG. 7 is a diagram that schematically shows a state during an operation for fitting a core member according to the first embodiment;
FIG. 8 is a diagram used to describe contact portions between the core members and multiple positioning parts according to the first embodiment;
FIG. 9 is a sectional view taken along line B-B in FIG. 1;
FIG. 10 is a magnified view that shows part of the bottommost core plate shown in FIG. 3;
FIG. 11 is a plan view that shows part of a drive device according to a second embodiment;
FIG. 12 is a plan view of a circuit board according to the second embodiment;
FIG. 13 is a sectional view taken along line C-C in FIG. 11; and
FIG. 14 is a plan view that shows part of a drive device according to a third embodiment.

In the following embodiments and modifications, same reference characters denote same constituting elements, and the repetition description will be omitted. Also, in each drawing, part of the constituting elements may be appropriately omitted, or the size of a constituting element may be appropriately enlarged or reduced, for the sake of convenience.

### (First Embodiment)

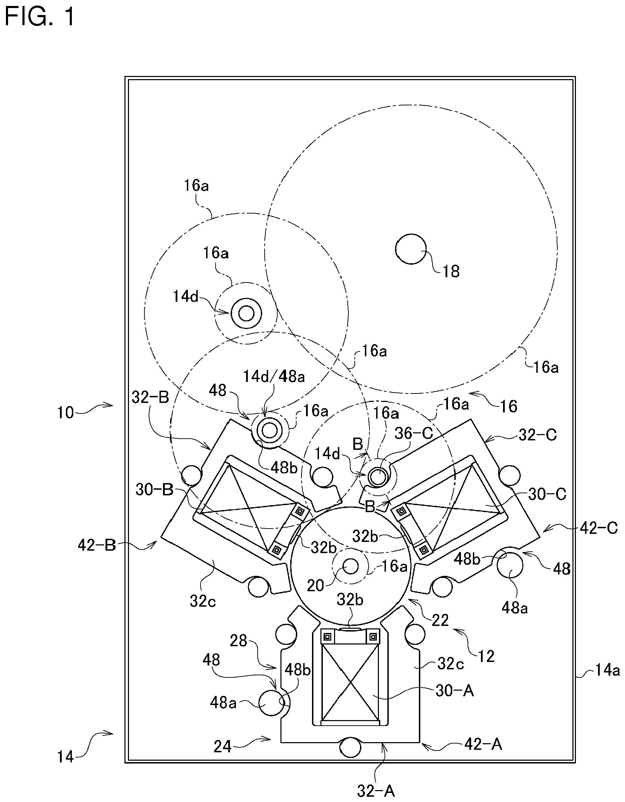

FIG. 1 is a plan view that schematically shows an internal structure of a drive device 10 according to the first embodiment. The drive device 10 mainly comprises a motor 12, a housing 14, a reduction mechanism 16, and an output shaft 18. The drive device 10 of the present embodiment is an actuator that reduces rotative power of the motor 12 and outputs the rotative power from the output shaft 18 to an external device.

The housing 14 houses the motor 12, reduction mechanism 16, output shaft 18, and the like. The housing 14 is a molding formed of a synthetic resin material or the like. The housing 14 is configured by fitting together a pair of housing members 14a. Each of the pair of housing members 14a has a shape obtained by dividing the housing 14 in an axial direction of a rotor 22, which will be described later, and the pair of housing members 14a form a box shape that opens toward one side of the axial direction. FIG. 1 only shows one of the housing members 14a. The one of the housing members 14a functions as a positioning base for positioning a stator 24 and the rotor 22 of the motor 12. The positioning base also supports the stator 24 and the rotor 22 of the motor 12.

The reduction mechanism 16 can reduce rotative power input from the motor 12 and transmit the rotative power to the output shaft 18. The reduction mechanism 16 is constituted by multiple gears 16a. In FIG. 1, pitch circles of the gears 16a are mainly indicated. The output shaft 18 is rotatably supported by the housing 14.

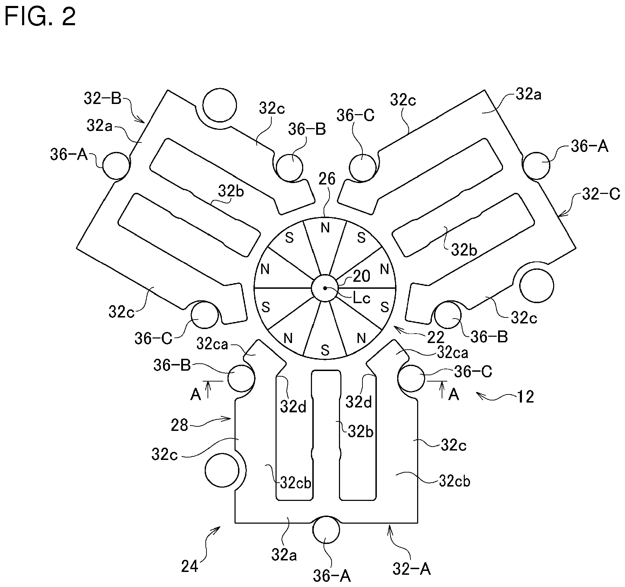

FIG. 2 is a plan view that shows part of the motor 12. As shown in FIGS. 1 and 2, the motor 12 comprises a rotating shaft 20, the rotor 22, and the stator 24. In the following, description will be made in which a direction along a rotating shaft line Lc of the rotor 22 is defined as an axial direction, and a radial direction and a circumferential direction of a circle around the rotating shaft line as the center are defined as a radial direction and a circumferential direction. Also, for the sake of convenience, one side of an axial direction of the rotor 22 (the near side for the viewer of the drawing of FIG. 2) is defined as the upper side, and the other side of the axial direction (the far side for the viewer of the drawing of FIG. 2) is defined as the lower side.

In the motor 12 of the present embodiment, the rotor 22 and the stator 24 are not housed in a motor casing and are provided in a bare state within the housing 14. The motor 12 of the present embodiment functions as a stepping motor.

The rotating shaft 20 is rotatably supported by the housing 14. Among the multiple gears 16a, an input gear 16a, to which power from the rotating shaft 20 is input, is provided to be integrally rotatable with the rotating shaft 20.

The rotor 22 is an inner rotor, and the stator 24 is disposed on the outer peripheral side of the rotor 22 in the radial direction. The rotor 22 is provided to be integrally rotatable with the rotating shaft 20.

The rotor 22 includes a magnet 26. The magnet 26 of the present embodiment has a ring shape and is magnetized such that south poles and north poles are alternately positioned in a circumferential direction of the rotor 22. The magnetic poles of the magnet 26 are arranged at a pitch of a predetermined angle in a circumferential direction of the rotor 22. In the present embodiment, the magnetic poles are arranged at a pitch of 36 degrees, so that the number of poles of the rotor 22 is ten, i.e., an even number.

The stator 24 includes a stator core 28, and coils 30-A, 30-B, and 30-C of multiple phases.

As shown in FIG. 2, the stator core 28 is constituted by multiple core members 32-A, 32-B, and 32-C arranged in a circumferential direction of the rotor 22. The stator core 28 of the present embodiment is constituted by the three core members 32-A, 32-B, and 32-C. The multiple core members 32-A, 32-B, and 32-C are arranged to be spaced apart from each other in the circumferential directions, and a gap is provided between the core members 32-A, 32-B, and 32-C adjacent to each other. Each of the multiple core members 32-A, 32-B, and 32-C has the same shape. Accordingly, the magnetomotive force of each of the core members 32-A, 32-B, and 32-C can be equalized, and commonality of the multiple core members 32-A, 32-B, and 32-C can be achieved, so that the management cost can be reduced.

In the following, the three core members serially arranged in the clockwise direction, starting from the core member positioned at the lower side in the figures, will be distinguished from each other as a first core member 32-A, a second core member 32-B, and a third core member 32-C, for the sake of convenience. Also, in the following, constituting elements having a feature in common may be given characters at the end of the reference numerals thereof, such as "-A, -B, -C", and such characters may be omitted when the constituting elements are collectively referred to.

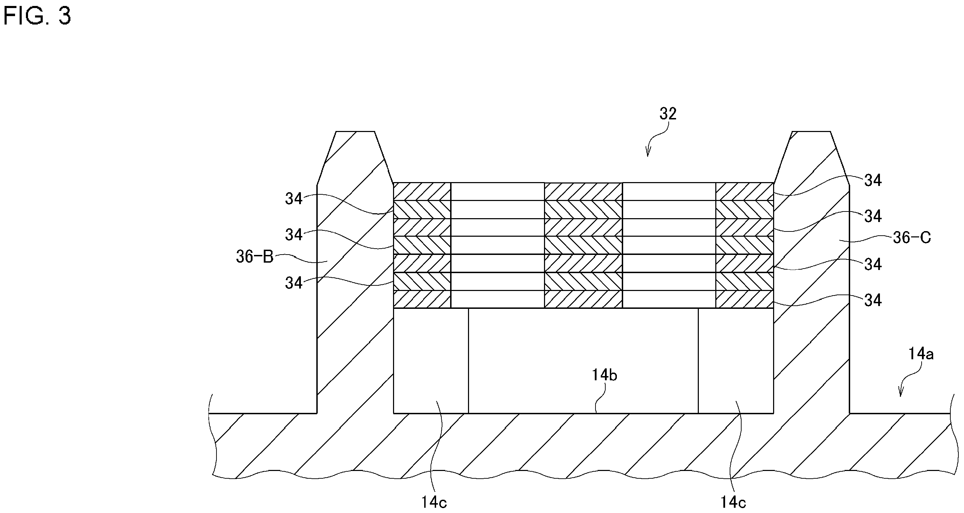

FIG. 3 is a sectional view taken along line A-A in FIG. 2. The core members 32 of the present embodiment include multiple core plates 34 laminated in an axial direction of the rotor 22. The core plates 34 are made of a magnetic material, such as magnetic steel sheets. The multiple core plates 34 are integrally formed by caulking, welding, or the like.

The housing member 14a includes core supporting parts 14c that each protrude from an inner bottom surface 14b, which is the base surface of the housing member 14a, toward the upper side (one side of an axial direction). The core members 32 are mounted on the core supporting parts 14c of the housing member 14a and supported by the core supporting parts 14c.

FIG. 2 will now be referred to. Each core member 32 includes a base part 32a that extends in a circumferential direction of the rotor 22, and multiple teeth parts 32b and 32c that protrude from the base part 32a toward the rotor 22. A distal end surface of each of the multiple teeth parts 32b and 32c radially faces the rotor 22. The distal end surfaces of all the teeth parts 32b and 32c of the stator core 28 are arranged at a pitch of a predetermined angle in a circumferential direction of the rotor 22. In the present embodiment, the distal end surfaces of all the teeth parts 32b and 32c are arranged at a pitch of 40 degrees, so that the number of poles of the stator 24 is nine, i.e., an odd number.

The teeth parts 32b and 32c include first teeth parts 32b and second teeth parts 32c, and a coil 30 is wound around each first teeth part 32b, and a slot part is formed between a first teeth part 32b and a second teeth part 32c. Second teeth parts 32c of the present embodiment are provided on the both sides of a first teeth part 32b in the circumferential directions.

Each first teeth part 32b linearly extends from the corresponding base part 32a toward the rotating shaft line Lc of the rotor 22. In each second teeth part 32c, a bent part 32d is provided midway between the base end part and the distal end surface, and the second teeth part 32c is bent at the bent part 32d in a direction that narrows the width of the slot part. Each second teeth part 32c includes a distal end portion 32ca located on the distal end side of the bent part 32d, and a base end portion 32cb located on the base end side of the bent part 32d. The distal end portion 32ca of each second teeth part 32c extends toward the rotating shaft line Lc of the rotor 22. The base end portion 32cb of each second teeth part 32c extends parallel with the corresponding first teeth part 32b.

As shown in FIG. 1, the coils 30 include a first coil 30-A of the first phase, a second coil 30-B of the second phase, and a third coil 30-C of the third phase. The first coil 30-A through the third coil 30-C are respectively provided for the first core member 32 through the third core member 32 and are each wound around the first teeth part 32b of the corresponding core member 32.

The coils 30 of multiple phases are energized using a predetermined excitation method, according to a pulse signal input from an external control device under the control of a control unit, which is not illustrated. The excitation method may be a 2-phase excitation method, a 1-phase excitation method, a 1-2 phase excitation method, or the like. In the excitation method, each time a pulse signal is input, the energization states of the coils 30 of multiple phases are switched so that the stator core 28 generates a magnetic field for rotating the rotor 22 by a predetermined step angle.

As shown in FIG. 2, the drive device 10 further comprises multiple positioning parts 36-A, 36-B, and 36-C that are in contact with the core members 32 such as to position them. The positioning parts 36-A, 36-B, and 36-C are provided for each of the multiple core members 32.

The multiple positioning parts 36-A, 36-B, and 36-C include first positioning parts 36-A that are each in contact with the corresponding core member 32 in the radial direction, and second positioning parts 36-B and third positioning parts 36-C that are each in contact with the corresponding core member 32 in a circumferential direction. Each of the positioning parts 36 is in contact with an outer surface of a core member 32. In the present specification, an "outer surface" of a core member 32 means a surface that forms the outer shape of the core member 32 and excludes a surface that forms an aperture of a closed cross-section of the core member 32.

Multiple positioning parts 36 provided for each of the multiple core members 32 are defined as a group, and multiple groups of the positioning parts 36 are provided. In the present embodiment, three positioning parts 36 provided for one core member 32 are defined as a group, and three groups of the positioning parts 36 are provided. The three positioning parts 36 are the first positioning part 36-A, the second positioning part 36-B, and the third positioning part 36-C. A core member 32 is lightly press-fitted inside a group of positioning parts 36 provided for the core member 32.

Each first positioning part 36-A is in contact with the base part 32a of the corresponding core member 32 from the outer peripheral side of the core member 32 in the radial direction. With such contact, the first positioning part 36-A positions the core member 32 in a radial direction such as to control displacement of the core member 32 toward the outer peripheral side in the radial direction.

Each second positioning part 36-B is in contact with a second teeth part 32c of the corresponding core member 32 from one circumferential direction (hereinafter, referred to as the clockwise direction). With such contact, the second positioning part 36-B positions the core member 32 in a circumferential direction such as to control displacement of the core member 32 in the clockwise direction.

Each third positioning part 36-C is in contact with a second teeth part 32c of the corresponding core member 32 from the other circumferential direction (hereinafter, referred to as the counterclockwise direction). With such contact, the third positioning part 36-C positions the core member 32 in a circumferential direction such as to control displacement of the core member 32 in the counterclockwise direction.

As shown in FIG. 3, each positioning part 36 protrudes from the inner bottom surface 14b of the housing member 14a toward the upper side (one side of an axial direction). Each positioning part 36 of the present embodiment has a columnar shape. Each positioning part 36 is in contact with the multiple core plates 34 constituting the corresponding core member 32.

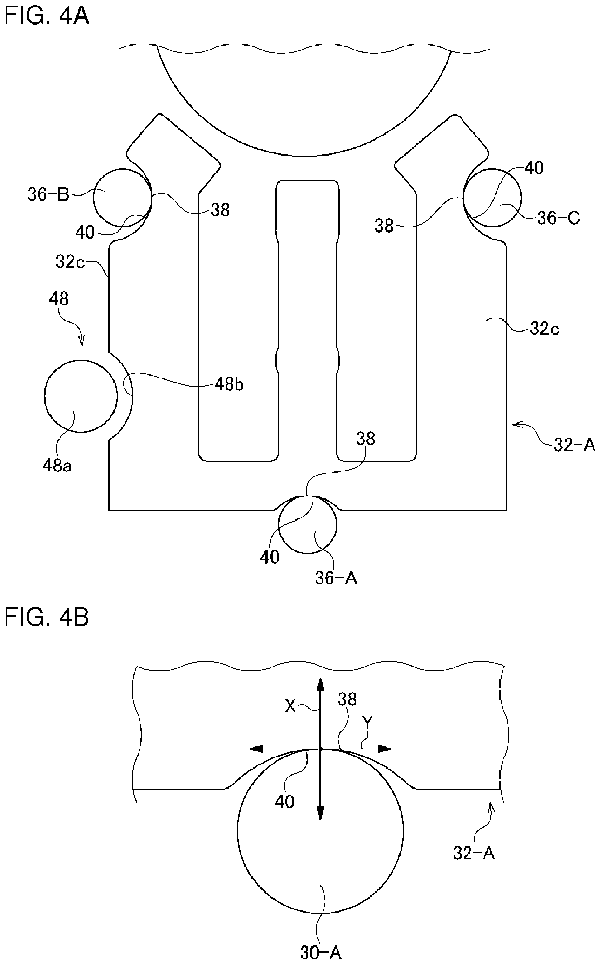

FIG. 4A is a magnified view of the first core member 32-A, and FIG. 4B is a magnified view of the first positioning part 36-A provided for the first core member 32-A. Each positioning part 36 includes a convex surface part 38 of an arc shape at a contact portion in contact with the corresponding core member 32. The convex surface part 38 is provided in each of the multiple positioning parts 36-A, 36-B, and 36-C. The convex surface part 38 of the present embodiment is provided over the entire range around the center of the circle constituted by the arc formed by the convex surface part 38.

Each core member 32 includes a concave surface part 40 of an arc shape at each contact portion in contact with a convex surface part 38. Each concave surface part 40 of a core member 32 is provided on an outer surface of the core member 32. Each concave surface part 40 forms an arc shape of which the radius of curvature is larger than that of the arc formed by each convex surface part 38. Each concave surface part 40 is provided on all the core plates 34 constituting the corresponding core member 32.

As shown in FIG. 4B, when a convex surface part 38 is brought into contact with a concave surface part 40, the convex surface part 38 controls not only displacement in a normal direction X passing through the contact portion between the convex surface part 38 and the concave surface part 40 viewed from an axial direction of the rotor, but also displacement in a direction Y perpendicular to the normal direction X (hereinafter, referred to as a normal perpendicular direction Y). More detailed description will be given.

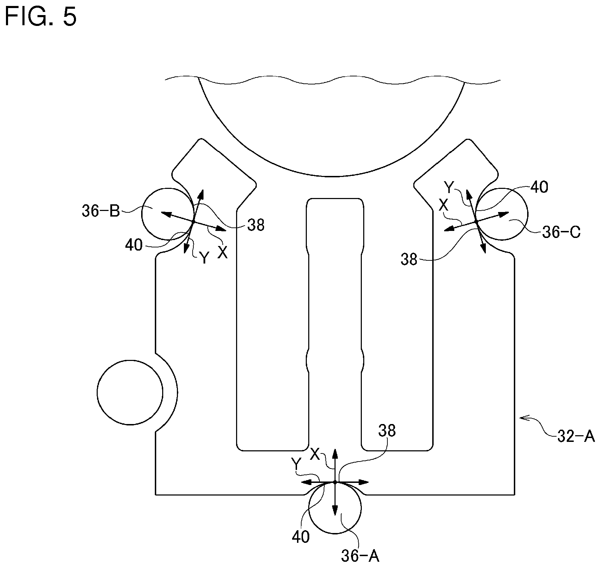

FIG. 5 is a diagram used to describe the functions of a core member 32 and multiple positioning parts 36 according to the embodiment. When the convex surface part 38 of the first positioning part 36-A is brought into contact with the corresponding concave surface part 40 of the core member 32, the convex surface part 38 positions the core member 32 such as to control not only displacement toward the outer peripheral side in the radial direction, which corresponds to a normal direction X, but also displacement in the both circumferential directions, which correspond to the normal perpendicular directions Y. When the convex surface part 38 of the second positioning part 36-B is brought into contact with the corresponding concave surface part 40 of the core member 32, the convex surface part 38 positions the core member 32 such as to control not only displacement in one circumferential direction, which corresponds to a normal direction X, but also displacement in the both radial directions, which correspond to the normal perpendicular directions Y. The convex surface part 38 of the third positioning part 36-C functions similarly to the convex surface part 38 of the second positioning part 36-B. Thus, the multiple positioning parts 36 for a core member 32 position the core member 32 in the circumferential directions and radial directions such as to control displacement of the core member 32 in the both circumferential directions and the both radial directions.

There will now be described the effects of the drive device 10 set forth above.

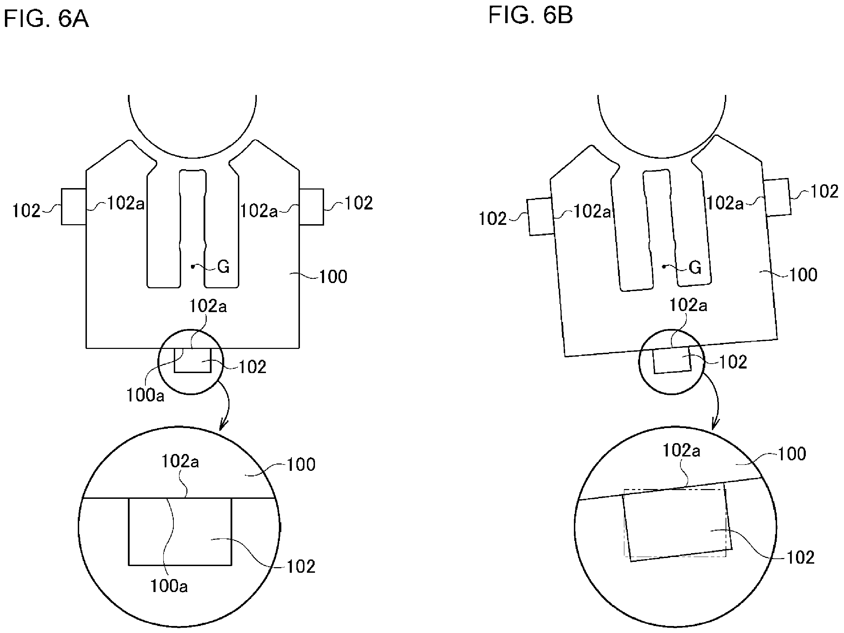

FIGS. 6 are plan views that schematically show a positioning structure in a reference example. The positioning structure includes multiple positioning parts 102 for positioning a core member 100. Each positioning part 102 includes a flat positioning surface 102a that is in surface-contact with a flat surface 100a of the core member 100. When the positioning surface 102a of each of the multiple positioning parts 102 is in surface-contact with a flat surface 100a of the core member 100, the multiple positioning parts 102 position the core member 100.

FIG. 6A shows an example in which the positioning surfaces 102a of the positioning parts 102 are located at target positions of the design target. FIG. 6B shows an example in which the positioning surfaces 102a are located at positions deviated from the target positions under the influence of dimensional tolerance. In the positioning structure of the reference example, since the positioning surfaces 102a are widely in surface-contact with the core member 100, the core member 100 is more likely to deviate from the target position owing to the influence of parallelism of the positioning surfaces 102a. For example, FIG. 6B shows an example in which the positioning surfaces 102a are inclined with respect to the target positions, and, owing to the influence thereof, the core member 100 is rotated around the center of gravity G from the target position.
(A) Meanwhile, according to the present embodiment, the convex surface part 38 and the concave surface part 40 of an arc shape of which the radius of curvature is larger than that of the arc formed by the convex surface part 38 are provided at the contact portion between a core member 32 and a positioning part 36, as shown in FIGS. 4. In this structure, the contact area between the core member 32 and the positioning part 36 is very small. This prevents the positional deviation of the core member 32 due to the influence of parallelism at the contact portion between the core member 32 and the positioning part 36, thereby improving the accuracy of positioning the core member 32.
(B) Also, in order to improve the accuracy of positioning a core member 32, the dimensional accuracy at the contact portion between the core member 32 and each positioning part 36 will be ensured in the finish processing. According to the embodiment, the contact area between the core member 32 and each positioning part 36 is very small, compared to that in the positioning structure of the reference example. Therefore, the range in which the dimensional accuracy should be ensured in the finish processing is also very small, so that the work burden in the finish processing can be reduced.
(C) Also, according to the embodiment, besides displacement of a core member 32 in a normal direction X, displacement thereof in a normal perpendicular direction Y can also be controlled, as described previously. Accordingly, design for reducing the number of positioning parts 36 required to position a core member 32 may be permissible. For example, in the positioning structure of the reference example, yet another positioning part 102 is required to control displacement toward the inner peripheral side in the radial direction of a core member 100, so that four positioning parts 102 are required in total. However, according to the embodiment, a core member 32 can be positioned using three positioning parts 36 in total. Also, since the number of parts required to position a core member 32 can be reduced, management work required to ensure necessary positioning accuracy can also be reduced.

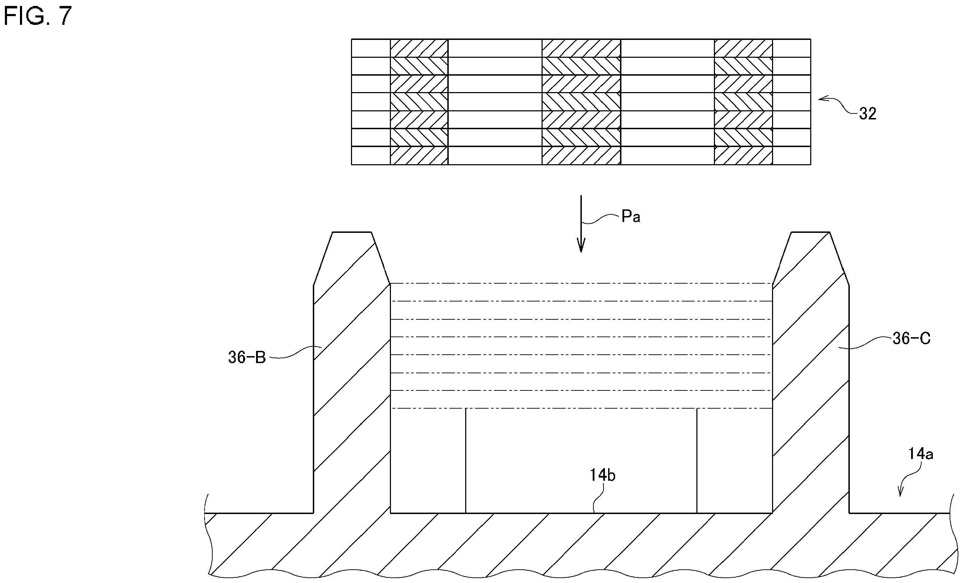

   FIG. 7 is a diagram that schematically shows a state during an operation for fitting a core member 32. A core member 32 is fitted by being moved in a fitting direction Pa toward the inner bottom surface 14b of the housing member 14a and press-fitted among multiple positioning parts 36. At the time, the core member 32 is pressed in the fitting direction Pa while sliding the multiple positioning parts 36. Accordingly, frictional resistance is applied to the core member 32 at the contact portions between the core member 32 and the positioning parts 36.
(D) In the positioning structure of the embodiment, the contact area between a core member 32 and a positioning part 36 is very small, compared to that in the positioning structure of the reference example. Accordingly, the frictional resistance applied by the positioning part 36 to the core member 32 can be reduced, so that favorable workability in the process for fitting the core member 32 can be obtained.
   Also, when a core members 32 is positioned, there can be considered another structure in which pin-shaped positioning parts are inserted through holes provided in the core member 32, so that the positioning parts are in contact with the inner surfaces, instead of the outer surfaces, of the core member 32. In this structure, the entirety of each positioning part is inserted through a hole provided in the core member 32. Accordingly, when the size of the positioning parts is increased to ensure the strength thereof, the entirety of the core member 32, as well as the holes therein, needs to be increased in size.
(E) However, according to the present embodiment, each of the multiple positioning parts 36 is in contact with an outer surface of a core member 32 such as to position the core member 32. Accordingly, the size of the positioning parts 36 can be easily increased without increasing the size of the core members 32, so that the strength of the positioning parts 36 can be ensured more easily by increasing the size thereof.

Also, the convex surface parts 38 are provided in the positioning parts 36, and the concave surface parts 40 are provided on the outer surfaces of the core members 32. Accordingly, compared to the case where the convex surface parts 38 are provided in the core members 32, the use of the materials of the core members 32 can be reduced, so that the yield can be improved.

In the following, other devised features of the drive device 10 will be described.

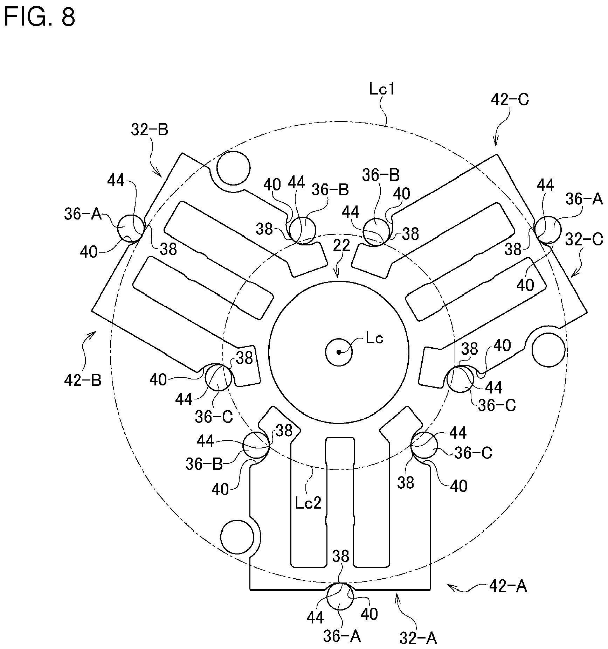

FIG. 8 is a diagram used to describe the contact portions between the core members 32 and the multiple positioning parts 36. A core member 32 and a group of positioning parts 36 (multiple positioning parts) provided for the core member 32 are defined as a core unit 42. In the present embodiment, there are three core units 42-A, 42-B, and 42-C corresponding to the three core members 32-A, 32-B, and 32-C. As with the core members 32, the core units 42-A, 42-B, and 42-C are distinguished from each other as a first core unit 42-A, a second core unit 42-B, and a third core unit 42-C.

The contact portion 44 between the core member 32 and a positioning part 36 in each core unit 42 is provided at a position rotationally symmetric about the rotating shaft line Lc of the rotor 22. This means, for example, that the contact portion 44 between the core member 32-A and the first positioning part 36-A in the first core unit 42-A and the contact portion 44 between the core member 32-B or 32-C and the first positioning part 36-A in the second core unit 42-B or the third core unit 42-C are provided at rotationally symmetric positions. Further, the multiple core members 32 are also provided at positions rotationally symmetric about the rotating shaft line Lc of the rotor 22. The rotationally symmetric positions in the embodiment include, besides positions that are rotationally symmetric literally, positions that are deviated from the rotationally symmetric positions under the influence of dimension errors.

Accordingly, the contact portion 44 between the core member 32 and a certain positioning part 36 provided for the core member 32 in each core unit 42 is provided at a position lying on the same circumference line Lc1 or the same circumference line Lc2. For example, the contact portion 44 between the core member 32 and the first positioning part 36-A in each core unit 42 is provided at a position lying on the same first circumference line Lc1. Also, the contact portion 44 between the core member 32 and the second positioning part 36-B and the contact portion 44 between the core member 32 and the third positioning part 36-C in each core unit 42 are provided at positions lying on the same second circumference line Lc2. The "positions lying on the same circumference line" in the embodiment include, besides positions that overlap the circumference line literally, positions that are deviated from the positions overlapping the circumference line under the influence of dimension errors.

Accordingly, commonality of the contact portion 44 between a core member 32 and a positioning part 36 can be achieved among the multiple core members 32. In the present embodiment, commonality of the shape of the core members 32 can also be achieved. Therefore, in order to ensure the accuracy of positioning the core members 32, commonality of a portion in which the dimensional accuracy should be ensured in each core member 32 can be achieved, thereby reducing the items to be managed and also reducing the management work.

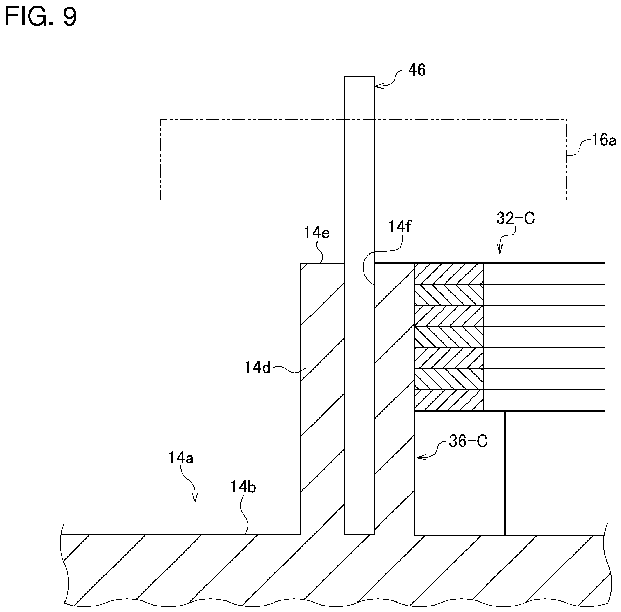

FIG. 9 is a sectional view taken along line B-B in FIG. 1. The drive device 10 includes a gear shaft 46 that rotatably supports a gear 16a. The gear shaft 46 extends in an axial direction of the rotor 22. The housing 14 includes bearing parts 14d that each protrude in the axial direction from the inner bottom surface 14b of the housing member 14a. The bearing parts 14d are integrally formed as part of the housing 14. In each bearing part 14d is formed a bearing hole 14f that opens on a distal end surface 14e of an axial direction and that extends in an axial direction. One end portion of the gear shaft 46 is pressed into the bearing hole 14f in a bearing part 14d, and the bearing part 14d non-rotatably supports the gear shaft 46. At the other end portion of the gear shaft 46, the gear 16a is supported.

Among the multiple positioning parts 36, the third positioning part 36-C in the third core unit 42-C is constituted by a bearing part 14d among the multiple bearing parts 14d of the housing 14. Accordingly, the core members 32 can be positioned using a portion having a function other than the positioning of the core members 32, so that the number of dedicated positioning parts 36 for the core members 32 can be reduced.

In order to obtain similar effects, a positioning part 36 may be constituted by a gear shaft 46, instead of a bearing part 14d. In order to obtain similar effects, at least one of the multiple positioning parts 36 may be a gear shaft 46 or a bearing part 14d.

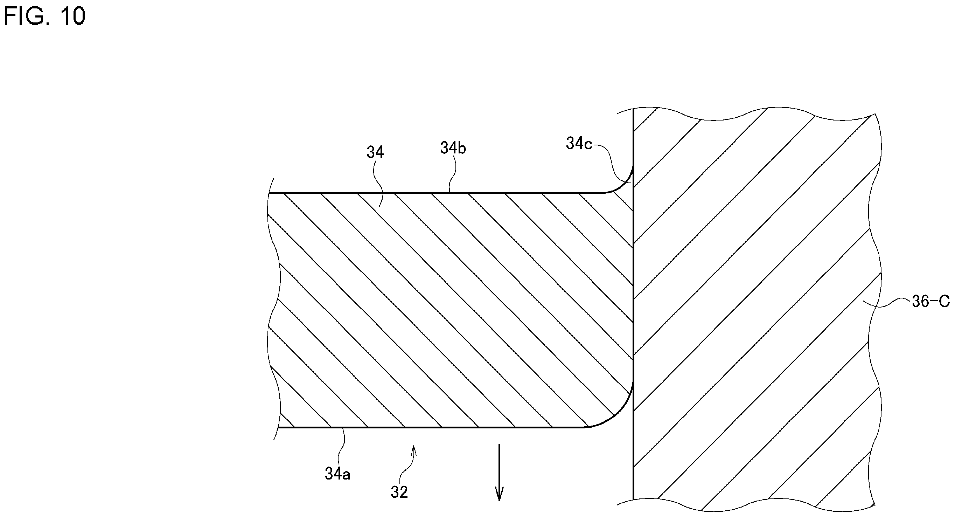

FIG. 10 is a magnified view that shows part of the bottommost core plate 34 shown in FIG. 3. Each core member 32 of the present embodiment is fitted, among multiple positioning parts 36, in a state of facing in a predetermined direction. The state of facing in "a predetermined direction" in the present embodiment means the state in which a droop surface 34a of a core plate 34 constituting a core member 32 faces in the fitting direction Pa of the core member 32. It can also be said as the state in which a burr surface 34b of the core plate 34 faces in an axial direction opposite to the fitting direction Pa. The burr surface 34b is a surface with a burr 34c at an edge part thereof, which is formed when a plate as a material of the core plates 34 is punched, and the droop surface 34a is a surface opposite to the burr surface 34b in the through-thickness direction.

FIG. 4A will now be referred to. For the fitting of a core member 32, the drive device 10 comprises a false fitting prevention structure 48 for preventing false fitting of a core member 32. The false fitting in the embodiment means fitting a core member 32 in a state of being inverted in an axial direction with respect to the predetermined direction. In the present embodiment, the false fitting means fitting a core member 32 in a state where the burr surface 34b of a core plate 34 faces in the fitting direction (the lower side in FIG. 10).

The false fitting prevention structure 48 of the present embodiment includes a first interference part 48a provided on the housing member 14a, which is a member separate from the core members 32, and an interference avoidance part 48b provided on a core member 32. The first interference part 48a protrudes from the inner bottom surface 14b of the housing member 14a in the axial direction. The interference avoidance part 48b is a concave part provided on a core member 32. When the core member 32 faces in the predetermined direction, the first interference part 48a is arranged inside the interference avoidance part 48b, so that the interference between the core member 32 and the first interference part 48a can be avoided.

With the false fitting prevention structure 48, if the core member 32 is inverted in an axial direction with respect to the predetermined direction, the second teeth part 32c on which the interference avoidance part 48b is not provided in the core member 32 will interfere with the first interference part 48a. Therefore, false fitting of the core member 32 can be prevented, and the core member 32 can be fitted when the core member 32 is made to face in the predetermined direction. As a result, when the core member 32 is fitted, contact between the burr 34c of the core plate 34 and a positioning part 36 can be avoided more easily. This prevents the situation in which, upon such contact, the burr 34c is separated from the core plate 34 and behaves as a contamination.

As shown in FIG. 1, the false fitting prevention structure 48 is provided for each of the first core unit 42-A through the third core unit 42-C. The first interference part 48a of the false fitting prevention structure 48 provided for the second core unit 42-B is constituted by a bearing part 14d among the multiple bearing parts 14d of the housing 14. Accordingly, false fitting of the core members 32 can be prevented using a portion having a function other than the prevention of false fitting of the core members 32, so that the number of dedicated first interference parts 48a for the core members 32 can be reduced.

Especially, since the number of first interference parts 48a increases as the number of core members 32 increases, an increase in cost will be a concern if the number of dedicated first interference parts 48a is monotonically increased based on the number of core members 32. As a countermeasure thereto, the first interference part 48a of the false fitting prevention structure 48 provided for each of the multiple core units 42 may be constituted by a separate bearing part 14d. This prevents the situation in which the number of dedicated first interference parts 48a is monotonically increased based on the number of core members 32, thereby avoiding an unnecessary increase in cost.

In order to obtain similar effects, a first interference part 48a may be constituted by a gear shaft 46, instead of a bearing part 14d.

Also, in order to obtain similar effects, instead of the concave part as the interference avoidance part 48b, a convex part may be provided as a second interference part on the core member 32, in each false fitting prevention structure 48. In this case, each false fitting prevention structure 48 is configured such that, when the core member 32 faces in the predetermined direction, the first interference part 48a and the second interference part do not interfere with each other, and, when the core member 32 is inverted from the predetermined direction, the first interference part 48a and the second interference part interfere with each other. The false fitting prevention structures 48 are not essential to the drive device 10 of the present invention.

### (Second Embodiment)

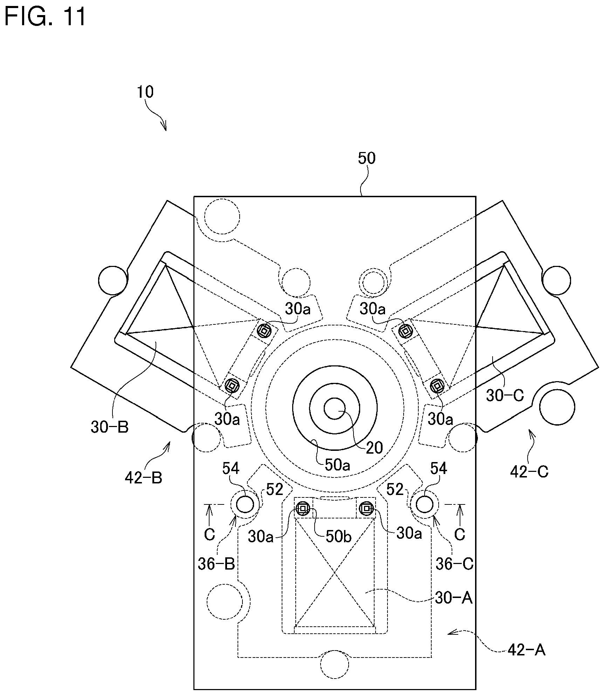

FIG. 11 is a plan view that shows part of the drive device 10 according to the second embodiment. Each coil 30 of the present embodiment includes coil terminals 30a for electrically connecting the coil 30 and a circuit board 50, which will be described later. The coil terminals 30a protrude toward the upper side (one side of an axial direction) of the rotor 22.

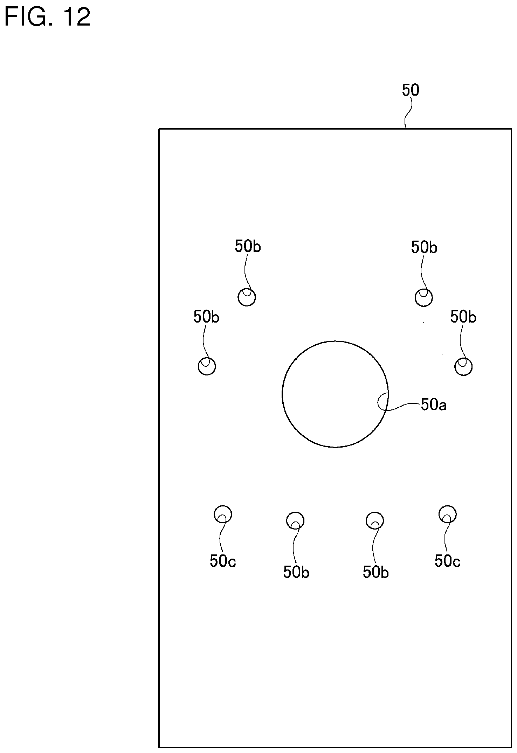

The drive device 10 of the present embodiment comprises the circuit board 50. FIG. 12 is a plan view of the circuit board 50. As shown in FIGS. 11 and 12, on the circuit board 50 is formed a shaft hole 50a through which the rotating shaft 20 is inserted. On the circuit board 50, through holes 50b through which the coil terminals 30a are respectively inserted are also formed. Each coil terminal 30a is mechanically connected to the circuit board 50 using a conductive connection material, such as solder and a conductive adhesive. The circuit board 50 is provided with the aforementioned control unit, which controls the energization states of the coils 30 of multiple phases. The control unit is provided in an IC chip or the like, which is not illustrated.

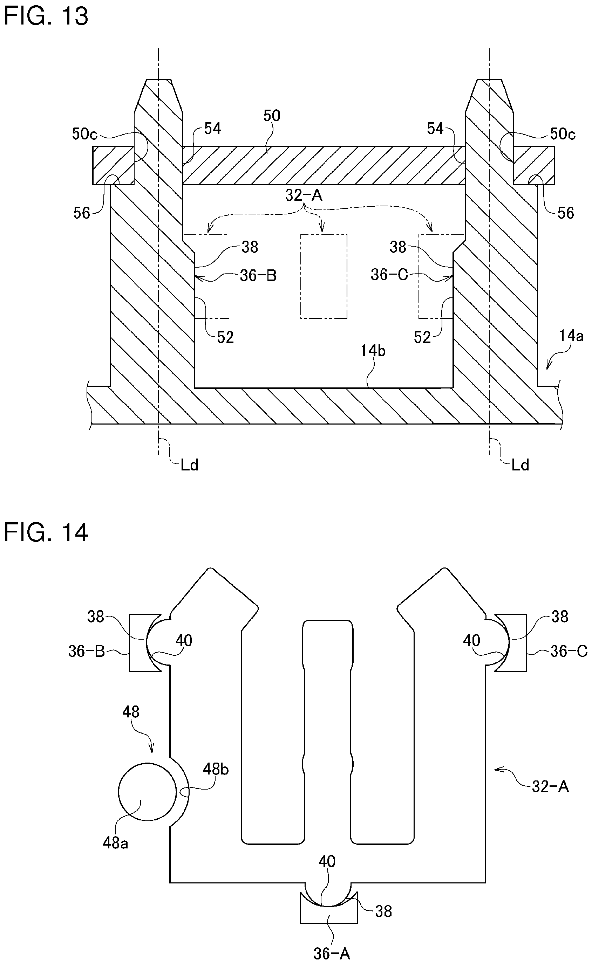

FIG. 13 is a sectional view taken along line C-C in FIG. 11. Specific positioning parts 36 among the multiple positioning parts 36 are also used for the positioning of the circuit board 50, besides the positioning of the core members 32. The specific positioning parts 36 in the present embodiment are the second positioning part 36-B and the third positioning part 36-C in the first core unit 42. Each specific positioning part 36 includes a first contact portion 52 and a second contact portion 54 that are provided at different positions along an axial direction of the rotor 22. The second contact portion 54 is provided closer to the distal end side along the axial direction than the first contact portion 52.

The first contact portion 52 of each specific positioning part 36 is in contact with the core member 32-A such as to position the core member 32-A in the radial directions and circumferential directions. The first contact portion 52 includes the convex surface part 38, described previously, at the contact portion in contact with the core member 32.

As shown in FIGS. 12 and 13, on the circuit board 50 are also formed two positioning holes 50c through which the two specific positioning parts 36-B and 36-C are respectively inserted. Into each positioning hole 50c, the second contact portion 54 of a specific positioning part 36 is lightly press-fitted. The second contact portion 54 of a specific positioning part 36 is in contact with the inner wall surface of a positioning hole 50c of the circuit board 50 such as to position the circuit board 50 in the radial directions and circumferential directions of the rotor 22.

The outer peripheral surface of the first contact portion 52 and the outer peripheral surface of the second contact portion 54 in a specific positioning part 36 form circular shapes of which the centers are located along the same center line Ld. This means that, when the outer peripheral surfaces of the first contact portion 52 and the second contact portion 54 are projected onto a virtual plane perpendicular to the center line Ld of a circular shape formed by the outer peripheral surface of the first contact portion 52, the centers of the circular shapes formed by the outer peripheral surfaces are located at the same position or at nearly the same positions. In the present embodiment, the outer peripheral surface of the first contact portion 52 is constituted by the convex surface part 38 having an arc shape, and the outer peripheral surface of the second contact portion 54 forms a circular shape continuously provided along the entire periphery. In this way, the "circular shape" in the embodiment includes both a circular shape continuously provided along the entire periphery and an arc shape. The outer peripheral surface of the first contact portion 52 forms a circular shape of which the diameter is larger than that of a circular shape formed by the outer peripheral surface of the second contact portion 54. Advantages thereof will be described.

In the present embodiment, the outer peripheral surfaces of the first contact portion 52 and the second contact portion 54 in a specific positioning part 36 form circular shapes of which the centers are located along the same center line Ld. Accordingly, by ensuring the dimensional accuracy of each of the outer peripheral surfaces of the first contact portion 52 and the second contact portion 54 based on the circle center line Ld in common, the relative positions of the first contact portion 52 and the second contact portion 54 of high accuracy can be ensured. Therefore, with the first contact portion 52 and the second contact portion 54 of each specific positioning part 36, the core member 32-A and the circuit board 50 can be positioned highly accurately. Consequently, the positional difference between a coil terminal 30a of a coil 30 and the corresponding through hole 50b of the circuit board 50 can be made smaller, so that the coil terminals 30a can be stably inserted through the respective through holes 50b.

Also, using different positions along an axial direction in each of the positioning parts 36-B and 36-C, the core member 32 and the circuit board 50 can be positioned. Accordingly, compared to the case of separately providing the portions used for such positioning, the use of the materials can be reduced.

Each specific positioning part 36 also includes a positioning portion 56 of a step shape that is in contact with the main surface of the circuit board 50 such as to position the circuit board 50 in an axial direction of the rotor 22. The positioning portion 56 is provided between the first contact portion 52 and the second contact portion 54.

### (Third Embodiment)

FIG. 14 is a plan view that shows part of the drive device 10 according to the third embodiment. The aforementioned embodiment describes an example in which the convex surface parts 38 are provided in the positioning parts 36, and the concave surface parts 40 are provided on the outer surfaces of the core members 32. Alternatively, the convex surface parts 38 may be provided on the outer surfaces of the core members 32, and the concave surface parts 40 may be provided in the positioning parts 36, as shown in FIG. 14. Namely, either each core member 32 or each positioning part 36 may include a convex surface part 38, and the other may include a concave surface part 40. Also in this case, the aforementioned effects (A)-(E) can be obtained.

Exemplary embodiments of the present invention have been described in detail. Each of the abovementioned embodiments merely describes a specific example for carrying out the present invention. The embodiments are not intended to limit the technical scope of the present invention, and various design modifications, including changes, addition, and deletion of constituting elements, may be made to the embodiments without departing from the scope of ideas of the invention defined in the claims. In the aforementioned embodiments, matters to which design modifications may be made are emphasized with the expression of "of the embodiment", "in the embodiment", or the like, but design modifications may also be made to matters without such expression. Also, the hatching provided on the cross sections in the drawings is not provided to limit the materials of the objects with the hatching.

Although an actuator for outputting the rotative power of the motor 12 via the reduction mechanism 16 to an external device has been described as an example of the drive device 10, the configuration is not limited thereto. For example, the drive device 10 may have a structure without the reduction mechanism 16 and may output the rotative power of the motor 12 directly to an external device.

In the embodiments, although the housing 14 has been described as an example of the positioning base for positioning the stator core 28, the positioning base is not limited thereto. The positioning base may be the circuit board 50, for example.

Although an example has been described in which the stator core 28 is constituted by a laminated body of multiple core plates, the structure is not limited thereto. For example, the stator core 28 may be constituted by a sintered body, such as sintered ferrite.

Although an example has been described in which the stator core 28 is constituted by three core members 32, the number of core members 32 is not limited thereto. For example, the number of core members 32 may be one, two, or four or above.

Although an example has been described in which three positioning parts 36 are provided for one core member 32, the number of positioning parts 36 provided for one core member 32 is not particularly limited.

Although an example has been described in which each first positioning part 36-A is in contact with the corresponding core member 32 from the outer peripheral side of the core member 32 in the radial direction, each first positioning part 36-A may be in contact with the corresponding core member 32 from the inner peripheral side of the core member 32 in the radial direction.

When the convex surface part 38 is provided in a positioning part 36, the convex surface part 38 may be provided over part of the range around the center of the circle constituted by the arc formed by the convex surface part 38.
- 10: drive device
- 14d: bearing part
- 16a: gear
- 22: rotor
- 24: stator
- 28: stator core
- 32: core member
- 36: positioning part
- 38: convex surface part
- 40: concave surface part
- 42: core unit
- 44: contact portion
- 46: gear shaft
- 48: false fitting prevention structure
- 50: circuit board
- 52: positioning part

## Claims

1. A drive device (10), comprising:
a core member (32-A, 32-B, 32-C) that constitutes a stator core (28); and
a plurality of positioning parts (36-A, 36-B, 36-C) that are in contact with the core member (32-A, 32-B, 32-C) such as to position the core member (32-A, 32-B, 32-C) in the radial directions and the circumferential directions of a rotor (22), wherein:
either the core member (32-A, 32-B, 32-C) or each of the positioning parts (36-A, 36-B, 36-C) includes a convex surface part (38) of an arc shape at a contact portion (44) in contact with the other; and
the other of the core member (32-A, 32-B, 32-C) and each of the positioning parts (36-A, 36-B, 36-C) includes, at a contact portion (44) in contact with the convex surface part (38), a concave surface part (40) of an arc shape of which the radius of curvature is larger than that of the arc formed by the convex surface part (38).

2. The drive device (10) of claim 1, wherein each of the plurality of positioning parts (36-A, 36-B, 36-C) is in contact with an outer surface of the core member (32-A, 32-B, 32-C) such as to position the core member (32-A, 32-B, 32-C).

3. The drive device (10) of claim 1 or 2, wherein:
the convex surface part (38) is provided in each of the positioning parts (36-A, 36-B, 36-C); and
the concave surface parts (40) are each provided on an outer surface of the core member (32-A, 32-B, 32-C).

4. The drive device (10) of any one of claims 1 through 3, wherein:
the stator core (28) is constituted by a plurality of core members (32);
a plurality of the positioning parts (36-A, 36-B, 36-C) are provided for each of the plurality of core members (32); and,
when one of the core members (32-A, 32-B, 32-C) and a plurality of the positioning parts (36-A, 36-B, 36-C) provided for the core member (32-A, 32-B, 32-C) are defined as a core unit (42), the contact portion (44) between one of the convex surface parts (38) and one of the concave surface parts (40) in each of the core units (42) is provided at a position rotationally symmetric about a rotating shaft line (Lc) of the rotor (22) .

5. The drive device (10) of any one of claims 1 through 4, wherein at least one of the plurality of positioning parts (36-A, 36-B, 36-C) is constituted by a gear shaft (46) that rotatably supports a gear (16a) or by a bearing part (14d) that supports the gear shaft (46).

6. The drive device (10) of any one of claims 1 through 5, further comprising a false fitting prevention structure (48) that does not interfere with the core member (32-A, 32-B, 32-C) when the core member (32-A, 32-B, 32-C) faces in a predetermined direction and that interferes with the core member (32-A, 32-B, 32-C) when the core member (32-A, 32-B, 32-C) is inverted from the predetermined direction in an axial direction of the rotor, wherein:
the false fitting prevention structure (48) comprises an interference part (48a) that interferes with the core member (32-A, 32-B, 32-C) when the core member (32-A, 32-B, 32-C) is inverted from the predetermined direction in an axial direction of the rotor; and
the interference part (48a) is constituted by a gear shaft (46) that rotatably supports a gear (16a) or by a bearing part (14d) that supports the gear shaft (46).

7. The drive device (10) of any one of claims 1 through 6, further comprising a circuit board (50),
the positioning parts (36-A, 36-B, 36-C) including:
a first contact portion (52) that is in contact with the core member (32-A, 32-B, 32-C) such as to position the core member (32-A, 32-B, 32-C); and
a second contact portion (54) that is provided at a position different, along an axial direction of the rotor (22), from the position of the first contact portion (52) in the positioning part (36-A, 36-B, 36-C) and that is in contact with the circuit board (50) such as to position the circuit board (50) in the radial directions and circumferential directions of the rotor (22), wherein
an outer peripheral surface of the first contact portion (52) and an outer peripheral surface of the second contact portion (54) form circular shapes of which the centers are located along the same center line (Ld).
